# EUROPÄISCHE PATENTSCHRIFT

(11) **EP 0 490 362 B1**
(45) Veröffentlichungstag und Bekanntmachung des Hinweises auf die Patenterteilung: **13.07.1994**
(21) Anmeldenummer: 91121255.3
(22) Anmeldetag: 11.12.1991
(51) Int. Cl.: B29C 47/64, B29C 47/66

(54) **Hochleistungsextruder mit konstanter Gangzahl im Einlauf- und Auslaufbereich eines Transferscherteiles**
High capacity extruder with a constant number of threads in the inlet and the outlet area of a transfer shear element
Extrudeuse à haut rendement à nombre de filets constant dans la zone d'entrée et dans la zone de sortie d'un élément de cisaillement par transfert

(30) Priorität: 14.12.1990 DE 4039942; 29.04.1991 US 693237
(43) Veröffentlichungstag der Anmeldung: 17.06.1992
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3012 Langenhagen 6 (DE)

(56) Entgegenhaltungen:
- EP-A- 0 336 702
- DE-B- 1 142 839
- FR-A- 2 358 191
- GB-A- 2 068 249
- US-A- 3 613 160
- US-A- 4 178 104
- PATENT ABSTRACTS OF JAPAN vol. 7, no. 187 (M-236)(1332) 16. August 1983 & JP-A-58 089 341 (TOSHIBA KIKAI K.K.) 27. Mai 1983

## Beschreibung

Die Erfindung betrifft einen Extruder zur Verarbeitung und Herstellung von Kautschuk und thermoplastischen Kunststoffen.

Als Austrags- und Homogenisierungsextruder sind in der Vergangenheit durchweg die sogenannten Stiftzylinderextruder eingesetzt worden, wie sie beispielsweise durch die DE-A-22 35 784 oder die DE-A-30 03 615 der Anmelderin bekannt sind. Bei Extrudern dieser Bauart ragen Metallstifte radial durch das Extrudergehäuse in den Verarbeitungsraum des Extruders, wobei die Extruderschnecke in dieser Zone unterbrochene Schneckenstege aufweist.

Aus der JP-A-58-89341 ist ebenfalls ein sogenannter Stiftzylinderextruder mit mehreren radial angeordneten Stiftreihen bekannt.

Diese Extruder zeichnen sich durch eine sehr hohe Ausstoßleistung und gute Homogenisierwirkung auf das zu verarbeitende Material aus und ermöglichen außerdem bei gleicher Schneckendrehzahl einen vergrößerten Materialdurchsatz pro Zeiteinheit im Vergleich zu konventionellen Kaltspeiseextrudern mit Scherteilschnecke.

Diese Vorzüge haben dazu geführt, daß Stiftzylinderextruder in den letzten 15 Jahren zu den am häufigsten eingesetzten Extrudern in der Gummiindustrie wurden.

Unabhängig davon wurde ein Extrudermischteil entwickelt, das als Transfermischteil bekannt geworden ist (DE-A 11 42 839). Dieses Mischteil ist im wesentlichen dadurch gekennzeichnet, daß sowohl die Extruderschnecke als auch die Innenwand des Extrudergehäuses über eine bestimmte Länge mit Nuten und Stegen versehen ist, wobei in Längsrichtung des Extrudergehäuses die Gangtiefe der Extruderschnecke in dem gleichen Maß bis auf Null abnimmt und anschließend wieder anwächst, wie die Gangtiefe der Gehäusenuten zunimmt bzw. wieder abnimmt. Durch diese Ausbildung von Extruderschnecke und -gehäuse wird ein vollständiger Extrudataustausch zwischen den Schneckennuten und den Gehäusenuten möglich, was eine gute Mischwirkung verursacht.

In der EP-A-0 336 702 wird ebenfalls ein Extruder mit einem Transfermischteil und einer Drosseleinrichtung beschrieben.

Der Transferextruder konnte gegenüber dem Stiftzylinderextruder einen gewissen Marktanteil für sich beanspruchen, insbesondere dann, wenn die Baulänge des Extruders klein gehalten werden sollte.

Zudem ist aus der US-A-3,613,160 bekannt, Extruder mit Drosselbauteilen zu versehen, mit denen der Extrudattransport im Extruder variabel von außen gesteuert werden kann. Gemäß dieser Druckschrift ist dazu auf dem Schneckenschaft der Extruderschnecke ein in etwa zylindrisches Bauteil angeordnet, das mit der Schnecke mitrotiert und den Verarbeitungsraum stromab vollständig versperrt. Im Bereich dieses zylindrischen Bauteils sind durch das Extrudergehäuse von außen zwei Drosselstifte radial in jeweils einen axial ausgerichteten Überströmkanal geführt, der in die Innenwand des Extrudergehäuses hineingearbeitet ist.

Bei zurückgezogenen Drosselstiften kann ein Teil des sich stromauf des zylindrischen Bauteils befindlichen Extrudates durch diese Kanäle zum stromabwärtigen Extruderteil gelangen. Durch unterschiedlich tiefes hineinfahren der Drosselstifte in diese Überströmkanäle, läßt sich dieser Extrudatstrom begrenzen.

Schließlich ist aus der DE-A-27 31 438 ein Transferextruder bekannt, bei dem sich die Anzahl der Stege im Gehäuse und auf der Schnecke im Transferbereich mit größer werdender Querschnittsfläche der Schneckengänge verringert, und mit kleiner werdender Querschnittsfläche der Schneckengänge erhöht. Dabei haben Schneckengänge mit größerer Querschnittsfläche eine größere Breite als Schneckengänge mit kleinerer Querschnittsfläche.

Die in der Vergangenheit an solchen Mischteilen durchgeführten Versuche haben zwar gezeigt, daß mit ihnen vergleichsweise gute Mischqualitäten erzielbar sind, und daß das Mischteil durchaus selbstreinigend ist. Nachteilig war aber, daß die dort vorgeschlagene Bauweise einen verhältnismäßig hohen Fertigungsaufwand verursachte, weshalb die Herstellungskosten hoch waren.

Da sich die Technologie dieser Mischextruder, abgesehen von Detailverbesserungen, in den letzten 15 Jahren nicht verändert hat, lag der Erfindung die Aufgabe zugrunde, einen Misch- und Homogenisierungsextruder vorzustellen, der im Vergleich zu den bekannten Vorrichtungen bei verringerten Investitionskosten bei wenigstens gleich guter Mischwirkung eine erhöhte Ausstoßleistung ermöglicht, eine deutlich kürzere Baulänge sowie eine Ausweitung der bisherigen Einsatzgebiete von Misch- und Homogenisierungsextrudern erlaubt.

Schließlich sollte die durch diesen Extruder leistbare Plastifizierungsarbeit in Abhängigkeit von den Eigenschaften des Extrudats frei einstellbar sein. Diese Aufgabe wird erfindungsgemäß durch einen Extruder nach Anspruch 1 gelöst. Zweckmäßige Weiterbildungen der Erfindung sind in den abhängigen Ansprüchen beschrieben.

Durch die Verbindung der beiden bekannten Mischteilbauweisen konnte ein Extruder mit den Merkmalen des Hauptanspruchs geschaffen werden, der gegenüber den Misch- und Homogenisierungsextrudern nach dem Stand der Technik über erhebliche Vorteile verfügt.

So konnte mit einem über einen Stiftzylinderbereich und einen Transferbereich mit zusätzlichen Stiften verfügenden Extruder festgestellt werden, daß bei gleicher Mischqualität und gleicher Schneckendrehzahl die Antriebsleistung des Extruders bis zu 50 % verringert und der Massedurchsatz bis zu 60 % bis 100 % erhöht werden konnte.

Diese ausgezeichneten Ergebnisse bewirken ferner eine 50 %ige Reduzierung des Antriebsdrehmomentes, was bei der Herstellung des Extruders zu einer starken Verminderung der Getriebekosten führt. Zudem läßt sich durch die Verbindung der Stiftzylinder und der Transferteiltechnologie die für die gleiche Mischqualität notwendige Bauteillänge des Mischbereiches um ca. 50 % gegenüber einem Extruder verringern, der nur nach dem Stiftzylinderprinzip arbeitet.

Durch die Anordnung von radial verstellbaren Drosselstiften, die in dem Teil des Transferbereichs des Extrudergehäuses radial hineinragen, in dem die Gehäusegänge in etwa ihr größtes Gangvolumen aufweisen, läßt sich der vorgeschlagene Extruder für die Verarbeitung von unterschiedlichen Kautschukmischungen einstellen. Mit der Eindringtiefe der Drosselstifte in die Gehäusegänge und den Verarbeitungsraum des Extruders, läßt sich somit die Plastifizierleistung bzw. die im Transferteil umgesetzte Friktionsenergie für das Extrudat beliebig und mischungsbezogen vorwählen. Damit kann im Vergleich zu den bisher bekannten gattungsgemäßen Extrudern neben der Schneckendrehzahl und der Verfahrensteiltemperatur auf einen weiteren frei wählbaren Prozeßparameter zurückgegriffen werden.

Schließlich erlaubt die Auslegung der Extruderschnecke und der Gehäusebuchse im Transferbereich bezüglich der Unabhängigkeit der Gangzahl und damit der Steganzahl von der Gangquerschnittsfläche eine kostengünstige Fertigung bei Aufrechterhaltung der Selbstreinigungsfähigkeit und Mischqualität des Extruders.

Die Erfindung läßt sich anhand von Ausführungsbeispielen und mit Hilfe der Zeichnung erläutern.

Sie zeigt in
- Fig. 1: einen Längsschnitt durch einen Einschneckenextruder ohne Drosselstifte im Transferteil,
- Fig. 2: einen Längsschnitt durch einen Einschneckenextruder mit Drosselstiften im Transferteil,
- Fig. 3a-c: die graphische Darstellung von Versuchsergebnissen mit einem Extruder der vorgeschlagenen Bauweise im Vergleich zum konventionellen Stiftextruder,
- Fig. 4: eine schematische Seitenansicht eines Transferschneckenteils,
- Fig. 5: eine schematische Seitenansicht eines aufgeschnittenen Transfer-Buchsenteils,
- Fig. 6: eine Abwicklung des Buchsenteils gemäß Fig. 5.

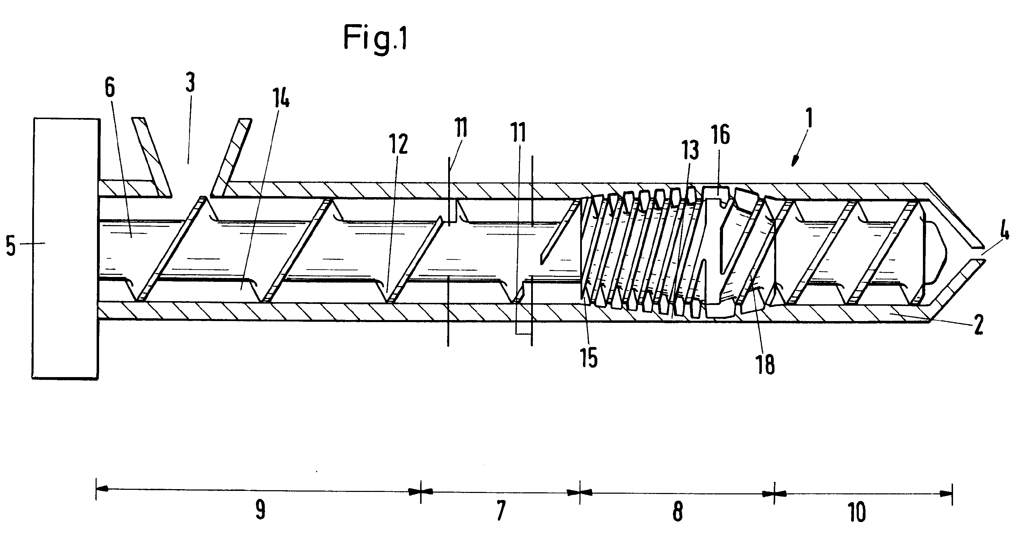

Figur 1 stellt einen schematischen Längsschnitt durch einen Einschneckenextruder 1 dar. Innerhalb des Extrudergehäuses 2 ist eine Extruderschnecke 6 angeordnet, die von einer Antriebseinheit 5 um ihre Längsachse antreibbar ist. Das Gehäuse 2 hat im Bereich seines stromaufwärtigen Endes eine Einfüllöffnung 3 für das zu extrudierende Material, welches den Extruder fertig gemischt und homogenisiert durch die Auslaßöffnung 4 verläßt.

Die Extruderschnecke 6 weist im Einzugsbereich 9 eine Schneckengeometrie auf, die dazu geeignet ist, in an sich bekannter Weise das durch die Einfüllöffnung 3 zugeführte Material in den Extruder einzuziehen und zu plastifizieren.

Stromabwärts dieses Einzugsbereiches ist ein Stiftzylinderbereich 7 vorgesehen, in dem zwei Reihen von Stiften 11 radial durch das Extrudergehäuse 2 in Richtung Schneckenachse in den Verarbeitungsraum 14 des Extruders hineinragen. In diesem Bereich 7 sind die Schneckenstege 12 in bekannter Weise in der Stiftebene durchbrochen, um ein Kollidieren mit den Stiften 11 zu vermeiden.

Stromab des Stiftzylinderbereiches 7 ist ein Transferbereich 8 angeordnet, bei dem in diesem Ausführungsbeispiel die Winkel zwischen den Stegen 18 der Extruderschnecke 6 und den Stegen 13 des des Extrudergehäuses 2 größer oder gleich 105 ° sind.

Der Transferbereich 8 läßt sich in einen Einlaufbereich und einen Auslaufbereich aufteilen, wobei beide Bereiche durch den Gehäusegang mit der größten Gangtiefe voneinander getrennt sind.

In diesem Transferbereich 8 des Extruder ist die Gangzahl im Einlauf- und Auslaufbereich konstant, wodurch die Anzahl der Stege im Einlauf- bzw. Auslaufbereich unabhängig von dem Gangquerschnitt der Gehäuse- bzw. Schneckengänge 16, 15 ist.

Das letzte Verfahrensteil der Extruderschnecke 6 wird durch den Druckerhöhungsbereich 10 gebildet, in dem die Schneckengeometrie so gewählt ist, das in bekannter Weise der Schmelzedruck auf den notwendigen Werkzeugdruck anhebbar ist.

Neben diesem Ausführungsbeispiel sind auch andere Realisierungsmöglichkeiten für diesen Stifttransferextruder denkbar. So könnte beispielsweise der Transferbereich 8 auch stromaufwärts vom Stiftzylinderbereich 7 angeordnet sein, wenngleich die oben vorgestellte Variante die besseren Misch- und Homogenisierungsresultate erbringt. Außerdem sei hier angemerkt, daß der Stiftzylinderbereich auch mit mehr als zwei Stiftreihen seine Misch- und Homogenisierungsaufgabe erfüllt. In Bezug auf das Kosten-Mischungsgüte-Verhältnis ist der Stiftzylinderbereich am günstigsten mit ein bis fünf Stiftreihen auszustatten.

Die bevorzugte Länge der einzelnen Extruderbereiche beträgt bei einer Extruderlänge von 10 Schneckendurchmessern D etwa 3 D für den Einzugsbereich, 1,5 bis 10 D, vorzugsweise 1,5 bis 2 D für den Stiftzylinderbereich, 2 bis 2,5 D für den Transferbereich und ca. 3 D für den Druckaufbaubereich.

Unabhängig von diesen Angaben können aber auch noch je nach Bedarf zusätzliche Verfahrensbereiche vor, nach oder zwischen den Stiftzylinder- und Transferbereichen angeordnet werden, so z.B. Entgasungs- oder Knetbereiche.

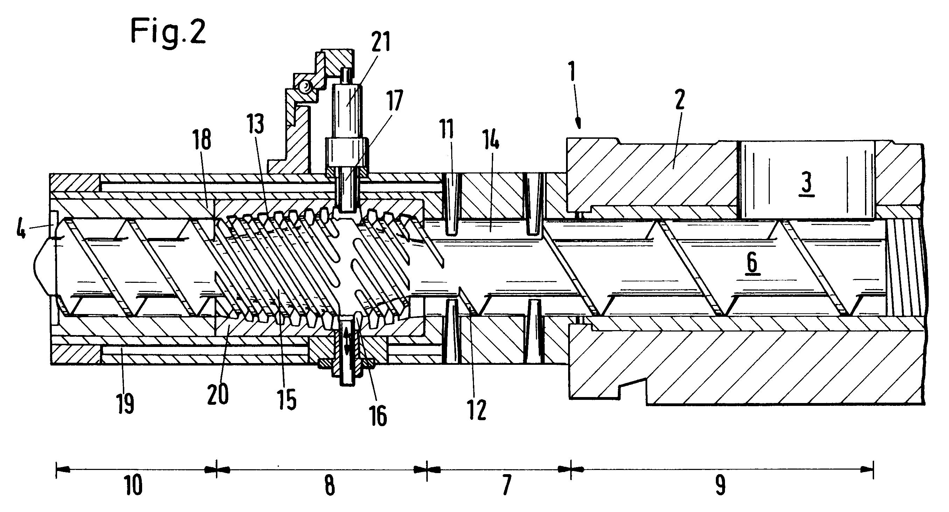

In Figur 2 ist ein Stifttransferextruder 1 mit Drosselstiften 11 im Transferbauteil dargestellt. Der Einfüllbereich 9 dieses Extruders entspricht auch hier dem üblichen Kaltspeise-Extruder und weist ein Verhältnis von Schneckenlänge (D) zu Schneckendurchmesser von drei auf.

Dem Einfüllbereich 9 nachgeordnet ist ein Extruderabschnitt von insgesamt 6 D Länge, in dem sich der Stiftzylinderbereich 7 mit zwei hintereinander angeordneten Stiftebenen mit Extruderstiften 11 befindet. Stromab des Stiftzylinderbereiches 7 ist der Transferbereich 8 mit etwa 2 D und der Druckaufbaubereich 9 mit etwa 1,5 D Länge vorgesehen.

Die Temperierung des Extruderzylinders 2 erfolgt in bekannter Weise durch Temperierungsbohrungen 19 in der Gehäusewand 2. Der Transferteil des Extrudergehäuses ist in diesem Ausführungsbeispiel als Gehäusebuchse 20 im Gehäuse 2 arretiert.

Die Steigung der Gänge von Extruderschnecke und Transferteil-Buchse sind so gewählt, daß die Stege zwischen der Schnecke und der Buchse einen Winkel von gleich oder mehr als 105 ° bilden. Daraus resultiert in vorteilhafter Weise, daß das Extrudat beim Passieren dieses Transferteiles, bedingt durch die sich daraus ergebende große Anzahl von Schnittpunkten zwischen Schnecken- und Buchsenstegen pro Schneckenumdrehung, einem intensiven Scherprozeß unterworfen wird.

Im Gegensatz zu den Schneckengängen sind die Buchsengänge im Transferteil nicht unterbrochen. Sie winden sich vielmehr kontinuierlich und stetig von der Einlaufzone des Transferteils bis zu seiner Auslaufzone in etwa zu- bzw. abnehmend spiralförmig um die gedachte Längsachse des Extruders.

Im ersten Drittel des Transferteiles wächst der Schneckenkerndurchmesser von der max. Gangtiefe bis auf den Außendurchmesser, d.h. das Gangvolumen der Schnecke 6 fällt vom Maximalwert im Einlaufbereich bis auf Null. Die Gangvolumina der Buchse 20 weisen die umgekehrte Tendenz auf. Somit wird das für das Extrudat effektiv vorhandene Durchtrittsvolumen in axialer und radialer Transportrichtung konstant gehalten. Zwangsläufig findet auf Grund dieser Gegebenheiten ein hundertprozentiger Extrudataustausch zwischen Schnecke 6 und Zylinderbuchse 20 statt.

Beim ca. 1,4 D langen Austrittsbereich des Transferteils gemäß Figur 2 nimmt das Gangvolumen der Schnecke 6 kontinuierlich zu und bei der Buchse 20 kontinuierlich ab, wobei wiederum das für das Extrudat vorhandene Gesamtgangvolumen von Schnecke und Buchse konstant gehalten wird.

Auch in diesem Ausführungsbeispiel ist die Gangzahl im Einlaufbereich und im Auslaufbereich des Transferbereiches 8 konstant, wodurch die Anzahl der Schnecken- und Gehäusebuchsenstege unabhängig von der Schnecken- und Gehäusegangquerschnittsfläche ist.

Umfangreiche Untersuchungen hatten zum Ergebnis, das insbesondere bei der Verarbeitung von hochviskosen Naturkautschuk-Mischungen, das Vorplastifizieren des Extruders im Stiftbereich bei niedrigen Schergefällen vor der intensiven Plastizierarbeit im Transferteil sich sowohl ausstoßerhöhend als auch positiv auf das Pulsationsverhalten der Maschine auswirken.

Neben der Schneckendrehzahl und den Verfahrensteiltemperaturen verfügt die Maschine über einen weiteren Prozeßparameter, der frei vorwählbar ist und die Universalität der Maschine hinsichtlich der Verarbeitbarkeit einer großen Bandbreite von unterschiedlichen Kautschukmischungen erweitert.

Am Ende des ersten Drittels der Transferzone 8 befindet sich in dieser Ausführungsform ein Drosselelement, welches symmetrisch am Umfang des Transferbauteils verteilte Stifte 17 aufweist, die radial in die nicht unterbrochenen Gänge der Transferteilbuchse 20 eintauchen und das Gangvolumen der Buchse 20 in diesem Bereich vom Maximalwert bis auf Null reduzieren können.

Mit diesen Drosselstiften 17, die von außen entweder manuell oder hydraulisch verstellt werden, kann die Plastifizierleistung bzw. die im Transferteil umgesetzte Friktionsenergie für das Extrudat beliebig vorgegeben werden.

Diesen Drosselstiften 17 ist es u.a. zuzuschreiben, daß es mit dem Stifttransfer-Extruder erstmalig gelang, Kautschukmischungs-Qualitäten zu verarbeiten, die bislang mit Kaltspeiseextrusion, auch durch den Einsatz speziell optimierter Stiftzylinderextruder, nicht mit ausreichender Homogenität verarbeitbar waren. Es handelt sich dabei um Naturkautschuk-Qualitäten beispielsweise für die Herstellung von Panzerkettenstollen als auch Laufstreifenmischungen mit demselben Basispolymer für LKW- und EM-Reifen.

Faßt man die bisher mit einem Extruder der Bauart GE 150 STx9D erzielten Testergebnisse zusammen, so kann man feststellen, daß im Vergleich zum Stiftzylinder-Extruder bei niedrig viskosen Synthese-Kautschukmischungen bis zu Viskositäten von 55 bis 60 ML 1 + 4 (100°C) Ausstoßleistungssteigerungen von 25 % bis 50 % zu erzielen sind, bei einer Reduzierung der spezifischen Energie bis zu 20 %.

Bei hochviskosen, schwierig zu verarbeitenden Naturkautschukqualitäten zwischen 90 bis 120 ML 1 + 4 (100°C) sind die Vorteile noch relevanter, da, wie sich zeigte, beim Stiftzylinder-Extruder die Extrudathomogenitätsgrenze bereits bei ca. 800 - 1 000 kg/h Ausstoß erreicht wird und somit in Einzelfällen Leistungsverdoppelungen beim Stifttransfer-Extruder möglich erscheinen.

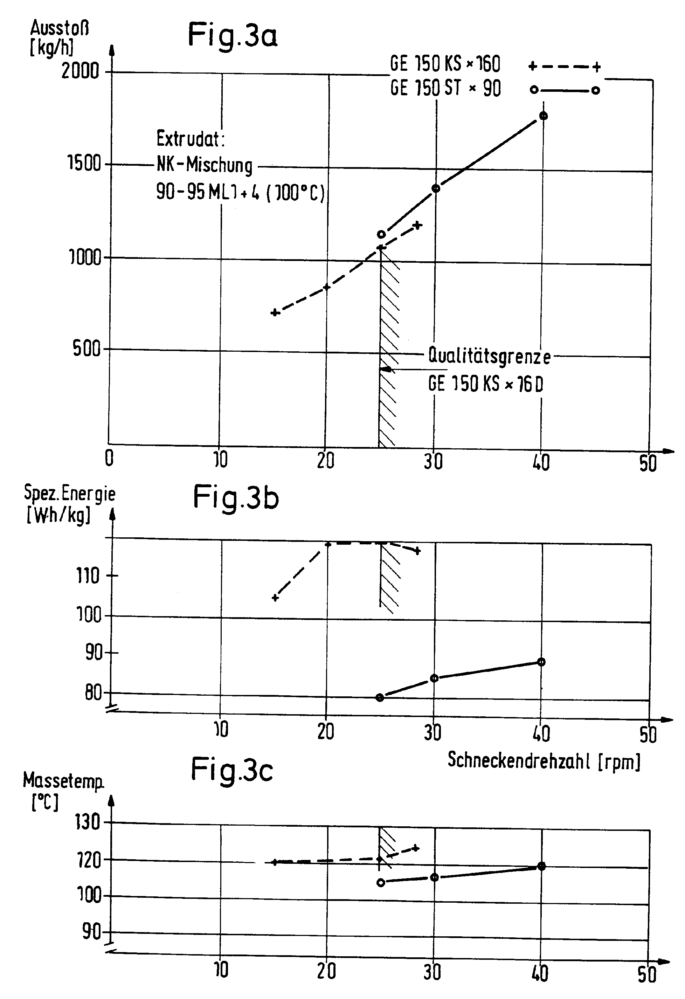

Die Figuren 3 a-c zeigen in graphischer Darstellung Versuchsergebnisse, die mit einem Extruder nach dem Stand der Technik (gestrichelte Kurven) und einem Labor-Transferstiftextruder (durchgezogene Kurven) vergleichbarer Größe erzielt wurden. Als Extrudat wurde eine Naturkautschukmischung NK 90-95 ML 1 + 4 (100 °C) verwendet, die als hochviskos und besonders schwierig zu verarbeiten bekannt ist. In allen drei Darstellungen ist durch einen vertikalen Strich mit Schraffur die Drehzahl von 25 Umdrehungen pro Minute markiert, bis zu der herkömmliche Extruder mit vertretbarer Qualität eine solche Kautschukmischung verarbeiten konnten.

In Figur 3a ist der Kautschukausstoß in Abhängigkeit von der Schneckendrehzahl aufgetragen, während Figur 3b die Massetemperatur und Figur 3c den spezifischen Energiebedarf pro kg Extrudat jeweils als Funktion von der Schneckendrehzahl darstellt. Die Zusammenstellung dieser drei Graphiken zeigt, daß mit dem hier vorgeschlagenen Extruderkonzept bei ausgezeichneter Misch- und Homogenisierungswirkung ein hoher Extrudatausstoß bei vertretbarer Extrudattemperatur und erheblich verringerten Energieeinsatz möglich wird.

Ergänzend kam hinzu, daß Probleme mit Produktporosität im Profil, die beim Stiftzylinder-Extruder schon im unteren Leistungsbereich auftraten beim Stifttransfer-Extruder überhaupt nicht festzustellen waren.

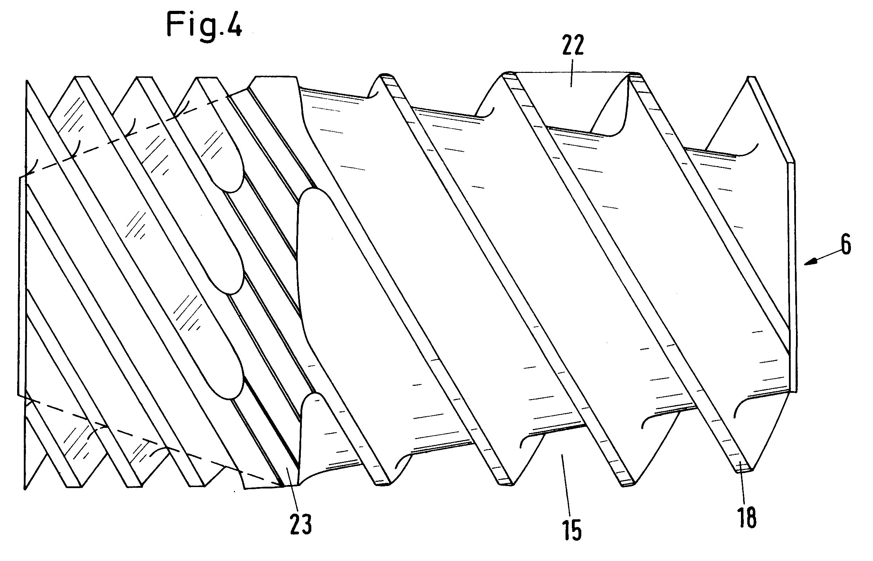

In Fig. 4 ist in einem Ausführungsbeispiel die Extruderschnecke 6 im Transferbereich 8 dargestellt. Die grundsätzlich bekannte Zu- bzw. Abnahme der Schneckengangsquerschnittsfläche im Einlauf- bzw. Auslaufbereich wird hier nur durch die konische Veränderung des Kernquerschnitts, also der Gangtiefe, der Schnecke bewirkt. Zwar ist die Gangzahl im Einlauf- und Auslaufbereich voneinander unterschiedlich, im jeweiligen Bereich aber konstant. Dies hat zur Folge, daß die Anzahl der Stege unabhängig von der Gangquerschnittsfläche 22 ist.

Fig. 4 ist in einer weiteren Ausführungsform zudem entnehmbar, daß die Transferschnecke im Bereich der maximalen Extrudatübergabe an die Gehäusegänge also etwa im Bereich der Drosselstifte 17, über Rillen 23 im Schneckenkern verfügt. Diese Rillen 23 verbinden die Schneckengänge im Einlauf- und Auslaufbereich zwar miteinander, sie erlauben aber wegen ihrer geringen Tiefe von etwa 1 mm und ihrer geringen Breite von etwa 10 mm keinen Materialtransport durch sie hindurch. Vielmehr kann mit ihrer Hilfe die Mischleistung des Transferbereiches auch bei schwierigen Extrudaten verbessert werden. Dies geschieht im wesentlichen dadurch, daß durch diese Rillen zusätzliche Scherkanten zur Verfügung gestellt werden.

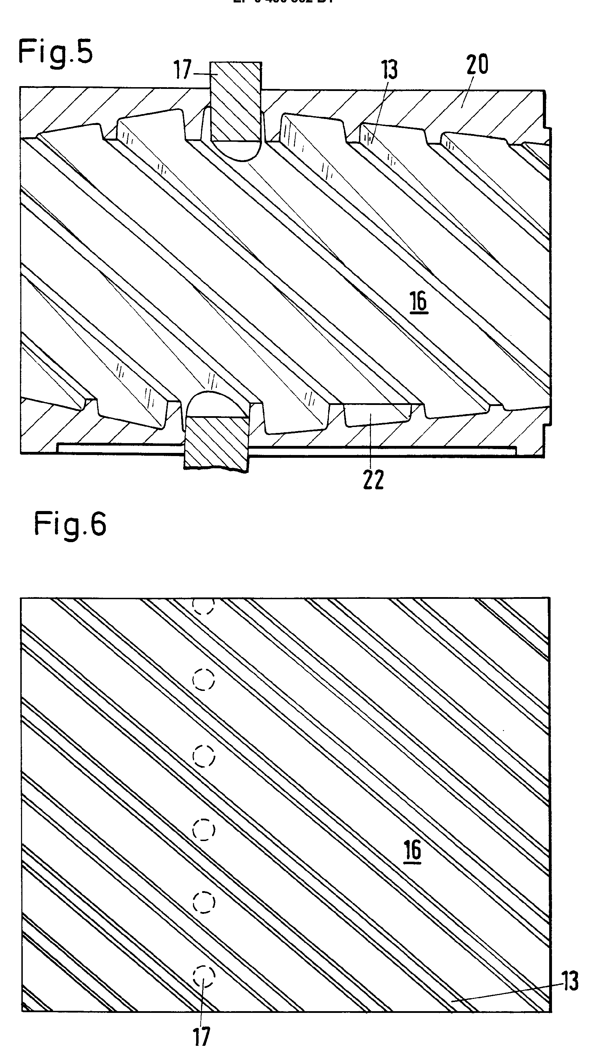

In Fig. 5 ist ein schematischer Längsschnitt durch eine mit der Transferschnecke gemäß Fig. 4 zusammenwirkender Transfergehäusebuchse 20 dargestellt. Auch hier wird deutlich, daß die Gehäusegangzahl jeweils im Einlauf- und Auslaufbereich konstant ist, so daß die Anzahl der Gehäusestege unabhängig von dem Gehäusegängquerschnitt bleibt.

Durch diese Bauweise wird einerseits eine ausgezeichnete Mischqualität bei sehr guter Selbstreinigzungswirkung gewährleistet, während vor allem in Verbindung mit der Abwicklung des Buchsenbauteil gemäß Fig. 4 ind Fig. 5 deutlich wird, daß der Fertigungsaufwand bei gleichbreiten Gehäuse- (und Schnecken-) gängen erheblich verringert wird.

Abschließend soll darauf hingewiesen werden, daß der vorgeschlagene Stiftzylinderextruder mit oder ohne Drosselstifte im Transferteil verwendet werden kann, wenngleich bei der optimalen Bauform nicht auf Drosselstifte verzichtet werden sollte. Schließlich läßt sich mit ihrer Positionierung der Extruder auf die unterschiedlichsten Kautschukmischungen und deren Verarbeitungsparameter einstellen und damit universell durch den Anwender benutzen. In einer unvollkommenen Ausführungsform können die verstellbaren Drosselstifte auch am stromabwärtigen Ende des Extruders, etwa am Ende des Druckaufbaubereiches 10, angeordnet sein.

## Patentansprüche

1. Extruder zur Verarbeitung und Herstellung von Kautschuk und thermoplastischen Kunststoffen, bestehend aus einem Extrudergehäuse (2) mit einer Einlaß- und einer Auslaßöffnung (3, 4), einem Antrieb (5) für eine im Verarbeitungsraum (14) des Gehäuses (2) um ihre Längsachse drehbar angeordnete Extruderschnecke (6),
wobei der Extruder (1) über zwei hintereinander angeordnete Misch- und Homogenisierbereiche (7, 8,) verfügt, daß der eine Bereich als Stiftzylinderbereich (7) mit radial in den Verarbeitungsraum (14) des Gehäuses (2) hineinragenden Stiften (11) und in dem Bereich der Stifte (11) unterbrochenen Schneckenstegen (12) ausgebildet ist,
daß der andere Bereich als Transferbereich (8) ausgelegt ist, in dem die Extruderschnecke (6) von einem Einlaufbereich zu einem Auslaufbereich eine stetige Verringerung ihres Gangvolumens bis auf Null und dann eine Gangvolumenvergrößerung bis auf einen Maximalwert aufweist, und in dem das Extrudergehäuse (2) über ununterbrochene Gehäusegänge verfügt, die von dem Einlaufbereich zum Auslaufbereich des Transferteils hin ihr Gangvolumen von Null auf einen Maximalwert vergrößern, um anschließend wieder auf ein Gangvolumen von Null abzufallen, und in dem die Gehäusegänge wendelförmig um eine gedachte Extruderlängsachse geführt sind,
daß im Bereich des maximalen Gangvolumens der Gehäusegänge radial verstellbare Drosselstifte (17) durch das Gehäuse (2) und in die Gehäusegänge (16) sowie in den Verarbeitungsraum (14) hineinragbar angeordnet sind, und
daß im Einlauf- und im Auslaufbereich des Transferbereiches (8) die Gangzahl und somit die Anzahl der Schneckenstege (18) und der Gehäusestege (13) unabhängig von der Gehäuse- und Schneckengangsquerschnittsfläche (22) konstant ist.

2. Extruder gemäß Anspruch 1,
wobei der Stiftzylinderbereich (7) stromaufwärts vor dem Transferbereich (8) angeordnet ist.

3. Extruder gemäß Anspruch 1,
wobei der Extruder stromauf der Misch- und Homogenisierungsbereiche (7, 8) über einen Einzugsbereich (9) und stromab über einen Bereich (10) verfügt, in dem das Extrudat auf den notwendigen Werkzeugdruck extrudierbar ist.

4. Extruder gemäß Anspruch 3,
wobei bei einer vorzugsweisen Extruderlänge von 10 Schneckendurchmessern D der Einzugsbereich (9) 3 D, der Stiftzylinderbereich (7) 1,5 bis 2 D, der Transferbereich (8) bis 2,5 D und der Druckerhöhungsbereich (10) etwa 3 D lang ist.

5. Extruder gemäß den Ansprüchen 1 bis 4,
wobei im Stiftzylinderbereich (7) vorzugsweise ein bis fünf Reihen Stifte (11) radial angeordnet sind.

6. Extruder gemäß den Ansprüchen 1 bis 5,
wobei die verstellbaren Drosselstifte (17) am stromabwärtigen Ende des Extruders (1) angeordnet sind.

7. Extruder gemäß den Ansprüchen 1 und 6,
wobei die Drosselstifte (17) über mechanisch, pneumatisch oder hydraulisch betätigbare Stellvorrichtungen (21) verfahrbar sind.

8. Extruder gemäß den Ansprüchen 1 bis 7,
wobei die Extruderschnecke (6) im Transferbereich (8) über flache und schmale Rillen (23) verfügt, die die einlaufseitigen und die auslaufseitigen Schneckengänge (15) miteinander verbindet.

## Claims

1. Extruder for processing and producing rubber and thermoplastics, comprising an extruder housing (2) with an inlet and an outlet opening (3, 4), as well as a drive unit (5) for an extruder screw (6) that is arranged in the processing chamber (14) of the housing (2) such as to allow its rotation about its longitudinal axis,
the extruder (1) being provided with two mixing and homogenizing sections (7, 8) arranged one behind the other,
one section of which is designed as pin barrel section (7) with pins (11) projecting radially into the processing chamber (14) of the housing (2) and the screw flights (12) being interrupted in the area of the pins (11),
the other section being designed as convert mixing section (8), in which the extruder screw (6) has a channel volume that is continuously reduced down to zero from an inlet zone to an outlet zone and subsequently increased to the maximum value, and in which the extruder housing (2) is provided with non-interrupted housing flights, the channel volume of which continuously increases from zero to a maximum value from the inlet zone to the outlet zone and subsequently decreases again to zero, and in which the housing channels are led in the form of a spiral around an imaginary longitudinal extruder axis, radially adjustable throttle pins (17), which project through the housing (2) into the housing channels (16) as well as into the processing chamber (14), being arranged in the area of the housing flights that presents the maximum channel volume, and the number of channels and thus the number of screw flights (18) and housing flights (13) in the inlet and oulet zones of the convert section (8) being constant, independently of the cross-sectional area (22) of the housing or screw channels.

2. Extruder as recited in claim 1,
with the pin barrel section (7) being arranged upstream of the convert section (8).

3. Extruder as recited in claim 1,
with the extruder being provided with an intake section (9) upstream of the mixing and homogenizing sections (7, 8), while downstream of the said sections it comprises a section (10) in which the material pressure can be increased to the required extrusion tool pressure.

4. An extruder as recited in claim 3,
with the intake section (9) presenting a length of 3 D, the pin barrel section (7) a length of 1.5 to 2 D, the convert section (8) a length of up to 2.5 D, and the pressure build-up section (10) a length of approximately 3 D given a preferred extruder length of 10 screw diameters D.

5. An extruder as recited in claims 1 to 4,
with the pin barrel section (7) being preferably provided with one to five rows of pins (11).

6. An extruder as recited in claims 1 to 5,
with the adjustable throttle pins (17) being arranged at the downstream end of the extruder (1).

7. An extruder as recited in claims 1 and 6,
the throttle pins (17) of which can be adjusted by means of mechanical, pneumatic or hydraulic adjusting devices (21).

8. An extruder as recited in claims 1 to 7,
the extruder screw (6) of which is provided with flat and narrow grooves (23) in the convert section (8) which connects the screw flights (15) on the inlet and outlet sides.

## Revendications

1. Extrudeuse pour la transformation et production de caoutchouc et de matières thermoplastiques comprenant un carter d'extrudeuse (2) avec une ouverture d'entrée et une ouverture de sortie (3, 4) et un entraînement (5) pour une vis d'extrudeuse (6) qui peut être tournée autour de son axe longitudinal dans la chambre de transformation (14) du carter (2),
l'extrudeuse (1) étant pourvue de deux parties de mélangeage et d'homogénéisation (7, 8) arrangées l'une derrière l'autre, l'une des parties étant conçue comme partie de cylindre à picots (7) avec des picots (11) pénétrant radialement dans la chambre de transformation (14) du carter (2) et avec des filets de vis (12) intérrompus au niveau des picots (11), l'autre partie étant conçue comme partie Convert (8), dans laquelle la vis d'extrudeuse (6) présentant d'une zone d'entrée jusqu'à une zone de sortie une réduction continue du volume de filet jusqu'à zéro suivie d'une augmentation du volume de filet jusqu'à une valeur maximale et dans laquelle le carter d'extrudeuse (2) est pourvu de filets de carter ininterrompus qui, de la zone d'entrée jusqu'à la zone de sortie de la partie Convert, agrandissent leur volume de filet de zéro jusqu'à une valeur maximale et diminuent ensuite leur volume de filet jusqu'à zéro et dans laquelle les filets de carter vont en spirale autour d'une axe longitudinale théorique de l'extrudeuse, au niveau du volume maximal des filets de carter étant arrangés des picots d'étranglement (17) ajustables radialement qui peuvent pénétrer à travers le carter (2) dans les filets de carter (16) ainsi que dans la chambre de transformation (14) et
dans les zones d'entrée et de sortie de la partie Convert (8) , le nombre de filets et ainsi le nombre des hauts de filets de la vis (18) et du carter (13) étant indépendants de la superficie de filet du carter et de la vis (22).

2. Extrudeuse selon revendication 1,
la partie de cylindre à picots (7) étant arrangée en amont de la partie Convert (8).

3. Extrudeuse selon revendication 1,
l'extrudeuse étant pourvue en amont de parties de mélangeage et d'homogénéisation (7, 8), d'une partie d'alimentation (9) et en aval d'une partie (10) servant à extruder la matière à la pression d'outil nécessaire.

4. Extrudeuse selon revendication 3,
dans le cas d'une longueur d'extrudeuse préférée de 10 diamètres de vis D, la longueur de la partie d'alimentation (9) étant 3 D, de la partie de cylindre à picots (7) 1,5 à 2 D, de la partie à Convert (8) jusqu'à 2,5 D et de la zone de montée en pression (10) environ 3 D.

5. Extrudeuse selon les revendications 1 à 4,
la partie de cylindre à picots (7) comprenant de préférence une à cinq rangées de picots (11).

6. Extrudeuse selon les revendications 1 à 5,
les picots d'étranglement ajustables (17) étant arrangés à l'extrémité en aval de l'extrudeuse (1).

7. Extrudeuse selon les revendications 1 à 6,
les picots d'étranglement (17) étant déplaçables au moyen de dispositifs d'ajustage (21) mécanique, pneumatique ou hydraulique.

8. Extrudeuse selon les revendications 1 à 7,
la vis d'extrudeuse (6) étant pourvue dans la partie Convert (8) de rainures (23) plates et étroites qui relient les filets de vis (15) sur les côtés d'entrée et de sortie.
